# EUROPÄISCHE PATENTANMELDUNG

(11) **EP 4 678 061 A1**
(43) Veröffentlichungstag der Anmeldung: **14.01.2026**
(21) Anmeldenummer: 25187874.0
(22) Anmeldetag: 07.07.2025
(51) Int. Cl.: A47B 57/42, E05D 5/02, F16B 5/00

(54) **BESCHLAGADAPTER ZUR MONTAGE AN EINEM HOHLPROFIL**

(30) Priorität: 08.07.2024 AT 5008024 U
(71) Anmelder: Roto Frank Fenster- und Türtechnologie GmbH, 70771 Leinfelden-Echterdingen (DE)
(72) Erfinder: RIZNIK, Peter, 8434 Tillmitsch (AT)
(74) Vertreter: Speringer, Markus

(57) **Zusammenfassung**

Die Erfindung betrifft einen Beschlagadapter (1) zur Montage an einem Hohlprofil (2), vorzugsweise ein Hohlprofil (2) für Fenster oder Türrahmen, wobei das Hohlprofil (2) in einer Seitenwand (3) zwei schlüssellochförmige Durchbrüche (4) zur Aufnahme des Beschlagadapters (1) aufweist, und wobei der Beschlagadapter (1) ein Basiselement (5) mit Aufnahmen (6) zum Verbinden mit weiteren Beschlagelementen, wie beispielsweise Tür- oder Fensterbänder, und zwei Befestigungsbolzen (7) umfasst. Die Befestigungsbolzen (7) umfassen einen zumindest teilweise mit einem Gewinde (8) zum Einschrauben in entsprechende Gewindebohrungen (9) im Basiselement (5) versehenen Schaft (10), einen Abstandsabschnitt (11) mit gegenüber dem Schaft (10) vergrößertem Durchmesser und einen Kopf (12) mit gegenüber dem Abstandsabschnitt (11) vergrößertem Durchmesser, wobei das Basiselement (5) über die in dieses eingeschraubten Befestigungsbolzen (7) in die schlüssellochförmigen Durchbrüche (4) im Hohlprofil (2) einhängbar und durch Klemmung der Seitenwand (3) des Hohlprofils (2) zwischen dem Kopf (12) der Befestigungsbolzen (7) und dem Basiselement (5) fixierbar ist.

## Beschreibung

### Technisches Gebiet

Die Erfindung betrifft einen Beschlagadapter zur Montage an einem Hohlprofil, vorzugsweise ein Hohlprofil für Fenster oder Türrahmen, wobei das Hohlprofil in einer Seitenwand zwei schlüssellochförmige Durchbrüche zur Aufnahme des Beschlagadapters aufweist, und wobei der Beschlagadapter ein Basiselement mit Aufnahmen zum Verbinden mit weiteren Beschlagelementen, wie beispielsweise Tür- oder Fensterbänder, und zwei Befestigungsbolzen umfasst.

### Stand der Technik

Tür- bzw. Fensterrahmen werden oftmals aus Hohlprofilen, beispielsweise aus Aluminium oder Kunststoff hergestellt. Bei der Fertigung ist es dabei wünschenswert, wenn bestimmte Beschlagelemente, welche für die spätere Montage von beispielsweise Bändern notwendig sind, bereits bei der Herstellung des Rahmens eingebaut werden. Die Profile werden dementsprechend bei der Herstellung mit entsprechenden Bohrungen versehen und die Beschlagelemente bzw. Adapter danach an den betreffenden Stellen fixiert. Die Beschlagelemente bzw. Adapter sind dabei meist mehrteilig und der Zusammenbau erfordert eine Abfolge von mehreren Schritten, um das entsprechende Element zu platzieren, dann Befestigungsmittel einzuführen und festzuschrauben. Derartige mehrteilige Elemente sind beispielsweise in der EP2248975 A1, der DE 102009030769 A1 oder der DE 2317880 A1 offenbart.

In den genannten Beispielen muss ein komplizierter mehrteiliger Aufbau des Elements zuerst entsprechend aufwändig in die Ausnehmungen im Hohlprofil platziert und verschoben, bzw. verdreht werden. Danach müssen Befestigungselemente eingeführt werden, während das Hauptelement in Position gehalten wird. Erst durch die Verschraubung der Befestigungselemente ist der Einbau abgeschlossen. Bei einer weitgehend automatisierten Fertigung der Tür- bzw. Fensterrahmen bedeuten die mehrteiligen teils kompliziert gefertigten Beschlagelemente bzw. Adapter höhere Kosten sowohl bei der Fertigung als auch bei der Montage.

### Kurzbeschreibung der Erfindung

Aufgabe der vorliegenden Erfindung ist es daher, einen Beschlagadapter zu schaffen, welcher aus möglichst wenigen einfach zu fertigenden Einzelteilen aufgebaut ist und mit möglichst wenigen Handgriffen oder automatisiert an den entsprechenden Durchbrüchen in einem Hohlprofil fixierbar ist. Dabei soll der Adapter als ganzes einsetzbar sein und ohne zusätzliches Festhalten in der Montageposition in dieser fixiert bzw. fixierbar sein. Es ist weiterhin wünschenswert, dass der Adapter in jeder möglichen Orientierung montierbar ist, wodurch er bei der Montage immer richtig eingesetzt wird.

Diese Aufgabe wird erfindungsgemäß dadurch gelöst, dass die Befestigungsbolzen einen zumindest teilweise mit einem Gewinde zum Einschrauben in entsprechende Gewindebohrungen im Basiselement versehenen Schaft, einen Abstandsabschnitt mit gegenüber dem Schaft vergrößertem Durchmesser und einen Kopf mit gegenüber dem Abstandsabschnitt vergrößertem Durchmesser umfassen, wobei das Basiselement über die in dieses eingeschraubten Befestigungsbolzen in die schlüssellochförmigen Durchbrüche im Hohlprofil einhängbar und durch Klemmung der Seitenwand des Hohlprofils zwischen dem Kopf der Befestigungsbolzen und dem Basiselement fixierbar ist. Ein derartiger Beschlagadapter zeichnet sich durch einen besonders einfachen Aufbau auf, welcher aus nur drei Teilen aufgebaut ist, die alle sehr einfach fertigbar sind. Die Befestigungsbolzen werden dabei vorab in den Basisteil eingesetzt und bei der Montage des Beschlagadapters muss dieser lediglich mit den beiden Köpfen der Befestigungsbolzen in die Durchbrüche im Hohlprofil eingesetzt und anschließend in Richtung des schmäleren Abschnitts der schlüssellochförmigen Durchbrüche verschoben werden. Die Seitenwand des Hohlprofils wird dadurch im Bereich der Durchbrüche zwischen dem Kopf der Befestigungsbolzen und dem Basiselement geklemmt und der Beschlagadapter ist fixiert. Sobald der fertige Tür- oder Fensterrahmen montiert wird, ist der Beschlagadapter durch weitere Anbauteile und/oder durch die Tür- bzw. Fensterzarge an sich gegen Aushebeln gesichert.

Dabei ist es ein bevorzugtes Merkmal, dass jeder der Befestigungsbolzen am freien Ende des Kopfes einen Schlitz zum Einführen eines Schraubwerkzeugs aufweist, und/oder dass der Schaft am freien Ende eine als Innensechskant ausgebildete Kontur zur Aufnahme eines Schraubwerkzeugs aufweist. Dies erleichtert einerseits den Zusammenbau des Beschlagadapters und je nach Ausführungsform erlaubt es andererseits auch die Einstellung der Höhe des Abstandsabschnitts, wodurch der Adapter an unterschiedliche Wandstärken der Hohlprofile anpassbar ist.

Gemäß einer möglichen Ausführungsform ist es vorgesehen, dass die Unterseite des Kopfes jedes Befestigungsbolzens flach ausgeführt ist und die Länge des Abstandsabschnitts in etwa der Dicke der Seitenwand des Hohlprofils entspricht, wobei über die als Innensechskant ausgebildete Kontur die Distanz zwischen der Unterseite des Kopfes und dem Basiselement im Bereich von etwa 5 bis 35%, bevorzugt etwa 20% der Höhe des Abstandsabschnitts einstellbar ist. Bei dieser Ausführungsform sollte der Abstandsabschnitt in seiner Höhe möglichst genau der Wandstärke des Hohlprofils entsprechen, um eine rasche Montage zu ermöglichen. Bei Abweichungen aufgrund von Fertigungstoleranzen kann die Höhe des Abstandsabschnitts über Verdrehen der Befestigungsbolzen über die Kontur am freien Ende des Schaftes auch nach dem Einsetzen des Beschlagadapters im Hohlprofil justiert werden, bzw. kann dadurch die Klemmkraft in den Durchbrüchen auch nachträglich erhöht werden.

Gemäß einer alternativen Ausführungsform ist es vorgesehen, dass die Unterseite des Kopfes jedes Befestigungsbolzens konisch dem Abstandsabschnitt zulaufend ausgebildet ist, wobei der Winkel der konischen Fläche zur Normalen auf die Längsachse des Befestigungsbolzens im Bereich von 5° bis 25°, bevorzugt etwa 15° ist, wobei die Distanz zwischen der äußeren unteren Kante des Kopfes und dem schaftseitigen Ende des Abstandsabschnitts in etwa der Dicke der Seitenwand des Hohlprofils entspricht, sodass es beim Einsetzen des Beschlagadapters in das Hohlprofil durch die konische Fläche zu einer Deformation des Hohlprofilmaterials im betreffenden Kantenbereich und einer damit verbundenen Erhöhung der Klemmkraft kommt. Bei dieser Ausführungsform ist ein Einstellen der Höhe des Abstandsabschnitts nicht zwingend notwendig. Vielmehr wird durch die konische Fläche an der Unterseite des Kopfes der Befestigungsbolzen die Kante im schlüssellochförmigen Durchbruch beim Einsetzen gebrochen und es kommt zu einer Deformation des Materials des Hohlprofils, wodurch die Klemmkraft erhöht wird und der Beschlagadapter sicher in Position gehalten wird. Bei einem Winkel der konischen Fläche von 15° ergibt sich ein Optimum zwischen der benötigten Kraft zum Einschieben des Beschlagadapters und der nötigen Klemmkraft zum sicheren Fixieren innerhalb des Hohlprofils.

Gemäß einem weiteren bevorzugten Merkmal ist es vorgesehen, dass der Durchmesser des Kopfes jedes Befestigungsbolzens 2 bis 2,5 mal dem Durchmesser des Abstandsabschnitts entspricht. Dieses Verhältnis erlaubt einen ausreichenden Flächenkontakt zwischen dem jeweiligen Kopf der Befestigungsbolzen und dem Material des Hohlprofils, um den Beschlagadapter sicher zu fixieren und ein Ausreißen des Hohlprofils und/oder ein Abreißen des Kopfes zu verhindern.

Dabei ist es ein weiteres bevorzugtes Merkmal, dass das Basiselement sowie die Befestigungsbolzen aus einem härteren Material bestehen als das Hohlprofil. Üblicherweise werden Hohlprofile für Türen oder Fenster aus Aluminium oder Kunststoff gefertigt. Der Beschlagadapter wird beispielsweise aus Stahl gefertigt und weist somit eine höhere Härte auf, wodurch sichergestellt ist, dass beim Aufschieben das Material des Hohlprofils deformiert wird und nicht jenes des Beschlagadapters.

Schließlich ist es ein weiteres bevorzugtes Merkmal, dass der Beschlagadapter symmetrisch aufgebaut ist, sodass er in beiden Orientierungsrichtungen einbaubar ist. Durch den symmetrischen Aufbau ist es unmöglich, den Beschlagadapter verkehrt herum einzubauen, wodurch die Montage insbesondere auch bei automatisierten Fertigungsstraßen vereinfacht wird.

### Kurze Beschreibung der Zeichnungsfiguren

Die Erfindung wird nun in größerem Detail anhand von Ausführungsbeispielen sowie mit Hilfe der beiliegenden Figuren beschrieben. Dabei zeigen
Fig. 1 eine schematische teilweise geschnittene Explosionsansicht eines Abschnitts eines Hohlprofils sowie eines erfindungsgemäßen Beschlagadapters,
Fig. 2 eine schematische Detailschnittansicht einer möglichen Ausführungsform eines erfindungsgemäßen Beschlagadapters und
Fig. 3 eine schematische Detailschnittansicht einer alternativen Ausführungsform eines erfindungsgemäßen Beschlagadapters.

### Beschreibung der Ausführungsarten

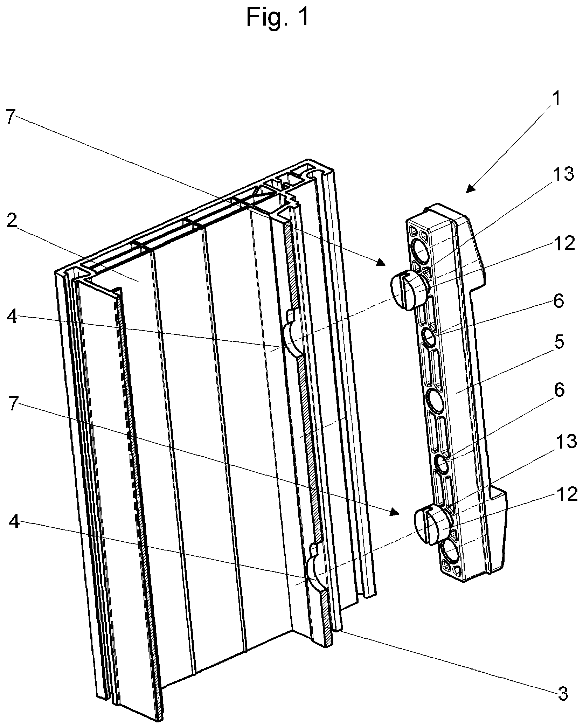

In der Fig. 1 ist in einer schematischen perspektivischen Ansicht ein erfindungsgemäßer Beschlagadapter 1 sowie ein teilweise geschnittener Abschnitt eines Hohlprofils 2 dargestellt. Im Hohlprofil 2 befinden sich in einer Seitenwand 3 schlüssellochförmige Durchbrüche 4, in welche der Beschlagadapter 1 einsetzbar ist.

Der Beschlagadapter 1 umfasst ein Basiselement 5 sowie zwei darin eingeschraubte Befestigungsbolzen 7 mit einem verbreiterten Kopf 12. Die Befestigungsbolzen 7 werden bei der Vormontage des Beschlagadapters 1 durch Einführen und Verdrehen eines Werkzeugs in die Schlitze 13 im freien Ende des Kopfes 7 in das Basiselement 5 eingeschraubt. Das Basiselement 5 weist ferner Aufnahmen 6 auf, in welche weitere Beschlagelemente, wie Tür- bzw. Fensterbänder oder dergleichen, einschraubbar sind.

Zur Befestigung des Beschlagadapters 1 im Hohlprofil 2 werden die Köpfe 12 der Befestigungsbolzen 7 in die entsprechenden Durchbrüche 4 in der Seitenwand 3 des Hohlprofils 2 eingeschoben und anschließend wird der Beschlagadapter 1 nach oben verschoben, wodurch der Abschnitt der schlüssellochförmigen Durchbrüche 4 mit geringerer Breite die Köpfe 12 der Befestigungsbolzen 7 hintergreift und zwischen den Köpfen 12 und dem Basiselement 5 eingeklemmt wird.

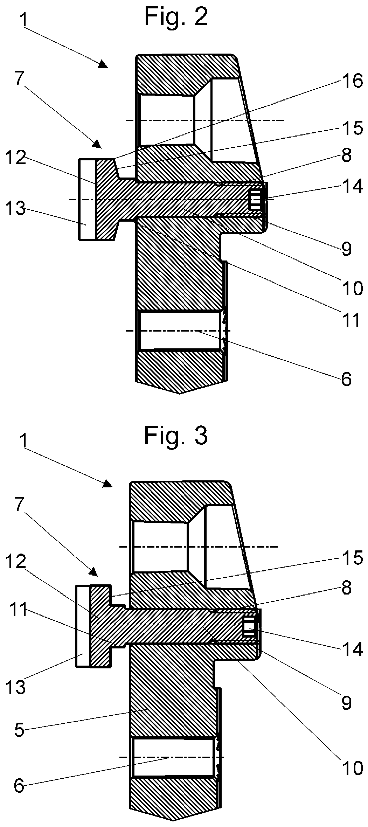

In den Fig. 2 und 3 sind jeweils unterschiedliche Ausführungsformen des Beschlagadapters 1 in einer Detailschnittansicht dargestellt. Der Befestigungsbolzen 7 weist einen Schaft 10 auf, welcher angrenzend an das freie Ende ein Gewinde 8 aufweist, mittels welchem der Befestigungsbolzen 7 in eine entsprechende Gewindebohrung 9 im Basiselement 5 einschraubbar ist. Am freien Ende des Schaftes 10 befindet sich ferner eine als Innensechskant ausgeführte Kontur 14 zum Einführen eines Werkzeugs, mittels welcher der Bolzen innerhalb der Gewindebohrung 9 schraubbar ist.

Am oberen Ende des Schaftes 10 befindet sich ein Abstandsabschnitt 11 mit einem gegenüber dem Schaft 10 vergrößerten Durchmesser. Oberhalb des Abstandsabschnitts 11 befindet sich der Kopf 12 mit gegenüber dem Abstandsabschnitt 11 vergrößerten Durchmesser.

In der Fig. 2 ist eine Ausführungsform dargestellt, bei der die Unterseite 15 des Kopfes 12 konisch dem Abstandsabschnitt 11 zulaufend ausgebildet ist. Der Abstand zwischen der äußeren unteren Kante 16 des Kopfes 12 und dem Basiselement 5 entspricht in etwa der Dicke der Seitenwand 3 des Hohlprofils 2. Die konische Unterseite 15 des Kopfes 12 weist gegenüber der Normalen auf die Längsachse des Befestigungsbolzens 7 einen Winkel von etwa 15° auf. Beim Verschieben des Beschlagadapters 1 innerhalb der schlüssellochförmigen Durchbrüche 4 kommt die Kante der Durchbrüche in Kontakt mit der konischen Unterseite 15 des Kopfes 12. Da das Hohlprofil 2 aus einem weicheren Material besteht als der Beschlagadapter 1, wird das Material der Seitenwand 3 in diesem Bereich deformiert und die Klemmung zwischen dem Beschlagadapter 1 und dem Hohlprofil 2 erhöht.

In der Fig. 3 ist eine Ausführungsform dargestellt, bei der die Unterseite 15 des Kopfes 12 flach ausgeführt ist. In dieser Variante entspricht die Höhe des Abstandsabschnitts 11 im Wesentlichen der Dicke der Seitenwand 3 des Hohlprofils 2. Um auf unterschiedliche Wandstärken des Hohlprofils einstellbar zu sein bzw. um die endgültige Klemmkraft im Durchbruch 4 zu erhöhen, kann der Befestigungsbolzen 7 über die Kontur 14 am freien Ende des Schaftes 10 ein- bzw. ausgeschraubt werden. Der Abstand zwischen der Unterseite 15 des Kopfes 12 und dem Basiselement 5 kann dabei im Bereich von etwa plus/minus 20% der Höhe des Abstandsabschnitts 11 eingestellt werden.

## Patentansprüche

1. Beschlagadapter (1) zur Montage an einem Hohlprofil (2), vorzugsweise ein Hohlprofil (2) für Fenster oder Türrahmen, wobei das Hohlprofil (2) in einer Seitenwand (3) zwei schlüssellochförmige Durchbrüche (4) zur Aufnahme des Beschlagadapters (1) aufweist, und wobei der Beschlagadapter (1) ein Basiselement (5) mit Aufnahmen (6) zum Verbinden mit weiteren Beschlagelementen, wie beispielsweise Tür- oder Fensterbänder, und zwei Befestigungsbolzen (7) umfasst, **dadurch gekennzeichnet, dass** die Befestigungsbolzen (7) einen zumindest teilweise mit einem Gewinde (8) zum Einschrauben in entsprechende Gewindebohrungen (9) im Basiselement (5) versehenen Schaft (10), einen Abstandsabschnitt (11) mit gegenüber dem Schaft (10) vergrößertem Durchmesser und einen Kopf (12) mit gegenüber dem Abstandsabschnitt (11) vergrößertem Durchmesser umfassen, wobei das Basiselement (5) über die in dieses eingeschraubten Befestigungsbolzen (7) in die schlüssellochförmigen Durchbrüche (4) im Hohlprofil (2) einhängbar und durch Klemmung der Seitenwand (3) des Hohlprofils (2) zwischen dem Kopf (12) der Befestigungsbolzen (7) und dem Basiselement (5) fixierbar ist.

2. Beschlagadapter (1) nach Anspruch 1, **dadurch gekennzeichnet, dass** jeder der Befestigungsbolzen (7) am freien Ende des Kopfes (12) einen Schlitz (13) zum Einführen eines Schraubwerkzeugs aufweist, und/oder dass der Schaft (10) am freien Ende eine als Innensechskant ausgebildete Kontur (14) zur Aufnahme eines Schraubwerkzeugs aufweist.

3. Beschlagadapter (1) nach Anspruch 2, **dadurch gekennzeichnet, dass** die Unterseite (15) des Kopfes (12) jedes Befestigungsbolzens (7) flach ausgeführt ist und die Länge des Abstandsabschnitts (11) in etwa der Dicke der Seitenwand (3) des Hohlprofils (2) entspricht, wobei über die als Innensechskant ausgebildete Kontur (14) die Distanz zwischen der Unterseite (15) des Kopfes (12) und dem Basiselement (5) im Bereich von etwa 5 bis 35%, bevorzugt etwa 20% der Höhe des Abstandsabschnitts (11) einstellbar ist.

4. Beschlagadapter (1) nach Anspruch 1 oder 2, **dadurch gekennzeichnet, dass** die Unterseite (15) des Kopfes (12) jedes Befestigungsbolzens (7) konisch dem Abstandsabschnitt (11) zulaufend ausgebildet ist, wobei der Winkel der konischen Fläche zur Normalen auf die Längsachse des Befestigungsbolzens (7) im Bereich von 5° bis 25°, bevorzugt etwa 15° ist, wobei die Distanz zwischen der äußeren unteren Kante (16) des Kopfes (12) und dem schaftseitigen Ende des Abstandsabschnitts (11) in etwa der Dicke der Seitenwand (3) des Hohlprofils (2) entspricht, sodass es beim Einsetzen des Beschlagadapters (1) in das Hohlprofil (2) durch die konische Fläche zu einer Deformation des Hohlprofilmaterials im betreffenden Kantenbereich und einer damit verbundenen Erhöhung der Klemmkraft kommt.

5. Beschlagadapter (1) nach einem der Ansprüche 1 bis 4, **dadurch gekennzeichnet, dass** der Durchmesser des Kopfes (12) jedes Befestigungsbolzens (7) 2 bis 2,5 mal dem Durchmesser des Abstandsabschnitts (11) entspricht.

6. Beschlagadapter (1) nach einem der Ansprüche 1 bis 5, **dadurch gekennzeichnet, dass** das Basiselement (5) sowie die Befestigungsbolzen (7) aus einem härteren Material bestehen als das Hohlprofil (2).

7. Beschlagadapter (1) nach einem der Ansprüche 1 bis 6, **dadurch gekennzeichnet, dass** der Beschlagadapter (1) symmetrisch aufgebaut ist, sodass er in beiden Orientierungsrichtungen einbaubar ist.
